# EUROPEAN PATENT APPLICATION

(11) **EP 4 576 489 A1**
(43) Date of publication of application: **25.06.2025**
(21) Application number: 23858992.3
(22) Date of filing: 25.07.2023
(51) Int. Cl.: H02J 7/00, H02J 15/00

(54) **ENERGY STORAGE SYSTEM AND POWER-SOURCE CONTROL METHOD AND APPARATUS THEREFOR, AND STORAGE MEDIUM**

(30) Priority: 31.08.2022 CN 202211052168
(71) Applicant: GD Midea Air-Conditioning Equipment Co., Ltd., Foshan, Guangdong 528311 (CN)
(72) Inventor: QIU, Yu, Foshan, Guangdong 528311 (CN); ZENG, Xianjie, Foshan, Guangdong 528311 (CN); JIANG, Haihao, Foshan, Guangdong 528311 (CN); HUANG, Zhaobin, Foshan, Guangdong 528311 (CN)
(74) Representative: Ran, Handong
(86) International application number: PCT/CN2023/109145
(87) International publication number: WO 2024/045956

(57) **Abstract**

An energy storage system and a power-source control method and apparatus therefor, and a storage medium. The energy storage system comprises a power-supply busbar, and a plurality of energy-storage battery cells, which are connected to each other in series and are electrically connected to the power-supply busbar. The power-source control method comprises: acquiring the battery voltage of each energy-storage battery cell and the energy-storage voltage of an energy storage system (S100); determining a first target voltage according to all the battery voltages (S200); and adjusting currents between a power-supply busbar and the plurality of energy-storage battery cells according to the first target voltage and a first preset voltage threshold value, and the energy-storage voltage and a second preset voltage threshold value (S300).

## Description

### CROSS-REFERENCE TO RELATED APPLICATION

This application claims priority to Chinese patent application No. 202211052168.8, filed on August 31, 2022 and entitled "ENERGY STORAGE SYSTEM AND POWER-SOURCE CONTROL METHOD AND APPARATUS THEREFOR, AND STORAGE MEDIUM", the application of which is incorporated herein by reference in its entirety.

### TECHNICAL FIELD

The present application relates to the technical field of batteries, and particularly to an energy storage system and a power-source control method thereof, an apparatus, and a storage medium.

### BACKGROUND

Currently, multiple individual cells in a battery pack are generally connected in series. In related art, during the charging or discharging process of the battery pack, it can only ensure that an overall voltage of the battery pack is charged or discharged to a target voltage. However, due to differences in performance parameters among individual cells in the battery pack, such as rated capacity, rated voltage, impedance, charge and discharge rates, and self-discharge rate, it is easy for some individual cells to experience overcharging during the charging process when the overall voltage has not yet reached the target voltage, or during the discharging process, some individual cells may experience over-discharging when the overall voltage has not reached the target voltage, both of which severely affect the service life of the battery pack. Therefore, finding a way to reduce the overcharging and over-discharging of individual cells during the charging and discharging processes of a battery pack is an urgent problem that needs to be solved.

### SUMMARY

The present application aims to at least partially solve one of the problems existing in the related art. To this end, the present application provides an energy storage system and a power-source control method thereof, an apparatus, and a storage medium, which can stabilize the individual voltage of energy storage battery cells, reduce the occurrence of overcharging or over-discharging phenomenon of the individual energy storage battery cells, and thus improve the reliability and service life of the energy storage battery pack.

In accordance with a first aspect of the present application, an embodiment provides a power-source control method of an energy storage system, which includes a power supply bus, and a plurality of energy storage battery cells connected in series and electrically connected to the power supply bus. The power-source control method includes:
acquiring a battery voltage of each energy storage battery cell and an energy storage voltage of the energy storage system;
determining a first target voltage based on all the battery voltages; and
adjusting a current between the power supply bus and the plurality of energy storage battery cells based on a relationship between the first target voltage and a first preset voltage threshold and a relationship between the energy storage voltage and a second preset voltage threshold.

The power-source control method according to the embodiment of the present application has at least the following beneficial effects. By measuring the energy storage voltage of the whole energy storage system and the battery voltage of each energy storage battery cell, and determining a first target voltage from the battery voltages of all the energy storage battery cells, a current energy storage condition of the energy storage battery cells is obtained. Based on the relationship between the first target voltage and the predetermined first preset voltage threshold and the relationship between the energy storage voltage and the predetermined second preset voltage threshold, a current between the power supply bus and the plurality of energy storage battery cells can be adjusted, in order to stabilize the battery voltages of the individual energy storage battery cells, thereby the charging condition of the energy storage battery cells is balanced. Therefore, based on the energy storage voltage of the energy storage system and the battery voltage of each energy storage battery cell, the current flowing through the energy storage battery cell is regulated in real time to charge the energy storage battery cells until the energy storage voltage of the energy storage system is charged to the second preset voltage threshold, and the voltage stability of the energy storage battery cells can be ensured, overcharging and hence damage of the energy storage battery cells can be prevented, and reliability and service life of the energy storage system can be improved.

In the power-source control method described above, the adjusting a current between the power supply bus and the plurality of energy storage battery cells based on a relationship between the first target voltage and a first preset voltage threshold, and a relationship between the energy storage voltage and a second preset voltage threshold includes:
obtaining a first current value based on a relationship between the first target voltage and the first preset voltage threshold, and a relationship between the energy storage voltage and the second preset voltage threshold; and
adjusting a current between the power supply bus and the plurality of energy storage battery cells based on the first current value.

Based on the energy storage condition of the energy storage battery cells and the energy storage condition of the whole energy storage system, that is, by determining a storable voltage of the energy storage battery cell via the difference between the first target voltage and the first preset voltage threshold, and determining a storable voltage of the energy storage system via the difference between the energy storage voltage and the second preset voltage threshold, the corresponding first current value is obtained. The first current value is used to adjust the current flowing through the energy storage system, that is, the current between the power supply bus and the plurality of energy storage battery cells, so as to stabilize the current flowing through the energy storage battery cells and prevent excessive current that could lead to overcharging and potential damage to the energy storage battery cells.

In the power-source control method described above, the energy storage system further includes a switch device connected to the plurality of energy storage battery cells; and
the adjusting the current between the power supply bus and the plurality of energy storage battery cells based on the first current value includes:
obtaining a first duty cycle control signal based on the first current value and a current currently flowing through the energy storage system; and
controlling the switch device based on the first duty cycle control signal to adjust the current between the power supply bus and the plurality of energy storage battery cells.

By obtaining the current that is currently flowing through the energy storage system and comparing it with the first current value, a first duty cycle control signal is obtained. The first duty cycle control signal is used to control the on/off state of the switch device, allowing for the adjustment of the current flowing into the energy storage battery cells from the power supply bus. This helps to prevent overcharging of the energy storage battery cells, thereby enhancing the reliability and service life of the energy storage system.

In the power-source control method described above, the determining a first target voltage based on all the battery voltages includes:
determining a battery voltage having the largest voltage value from among all the battery voltages; and
determining the battery voltage having the largest voltage value as the first target voltage.

The battery voltages of all the energy storage battery cells are obtained, sorted and compared, and the battery voltage having the largest voltage value is determined and selected from all the battery voltages, indicating that the battery cell has the highest probability of overcharging under the current condition. Therefore, to prevent overcharging while the energy storage system has not yet completed charging, this battery voltage is set as the first target voltage, and the current is adjusted based on the first target voltage.

In accordance with a second aspect of the present application, an embodiment provides a power-source control method of an energy storage system, which includes a power supply bus and a plurality of energy storage battery cells connected in series and electrically connected to the power supply bus. The power-source control method includes:
acquiring a bus voltage of the power supply bus and a battery voltage of each energy storage battery cell;
determining a second target voltage based on all the battery voltages; and
adjusting a current between the power supply bus and the plurality of energy storage battery cells based on a relationship between the second target voltage and a third preset voltage threshold, and a relationship between the bus voltage and a fourth preset voltage threshold.

The power-source control method according to the embodiment of the present application has at least the following beneficial effects. By measuring the bus voltage of the power supply bus and the battery voltage of each energy storage battery cell, and determining a second target voltage from the battery voltages of all the energy storage battery cells, a current energy storage condition of the energy storage battery cells is obtained. Based on both the relationship between the second target voltage and the predetermined third preset voltage threshold and the relationship between the bus voltage and the predetermined fourth preset voltage threshold, a current between the power supply bus and the plurality of energy storage battery cells can be adjusted, in order to stabilize the current, thereby stabilizing the bus voltage and the individual battery voltages and achieving the effect of controlling the discharge of the individual energy storage battery cells. Therefore, based on the bus voltage and the battery voltages, the current between the power supply bus and the plurality of energy storage battery cells is regulated in real time, and the bus voltage changes with the supplied current until the bus voltage reaches the second preset voltage threshold, so as to stabilize the bus voltage and current and also prevent over-discharge and damage of the energy storage battery cells, thereby improving the reliability and service life of the energy storage system.

In the power-source control method described above, the adjusting a current between the power supply bus and the plurality of energy storage battery cells based a relationship between on the second target voltage and a third preset voltage threshold, and a relationship between the bus voltage and a fourth preset voltage threshold includes:
obtaining a second current value based on a relationship between the second target voltage and the third preset voltage threshold, and a relationship between the bus voltage and the fourth preset voltage threshold; and
adjusting a current between the power supply bus and the plurality of energy storage battery cells based on the second current value.

Based on the energy storage condition of the energy storage battery cells and the power supply condition of the energy storage system, it is determined whether the bus voltage reaches the fourth preset voltage threshold, providing a stable voltage to a power consumption device. At the same time, it is determined whether the second target voltage meets the discharge condition to avoid over-discharge of the energy storage battery cells. This leads to the target supply current for the power supply bus, that is, the second current value. The second current value is used to regulate the current between the power supply bus and the energy storage battery cells, such that the bus voltage of the power supply bus reaches the fourth preset voltage threshold.

In the power-source control method described above, the energy storage system further includes a switch device connected to the plurality of energy storage battery cells, the power supply bus being connected to the switch device;
the adjusting the current between the power supply bus and the plurality of energy storage battery cells based on the second current value includes:
obtaining a second duty cycle control signal based on the second current value and a current currently flowing through the power supply bus; and
controlling the switch device based on the second duty cycle control signal to adjust the current between the power supply bus and the plurality of energy storage battery cells.

The current that is currently flowing through the power supply bus is obtained and compared with the second current value. Based on the difference between the current that is currently flowing through the power supply bus and the second current value, the second duty cycle control signal is obtained, so that the second duty cycle control signal is used to control the switch device, adjusting the current between the power supply bus and the plurality of energy storage battery cells to the second current value. This stabilizes the bus voltage, prevents the bus voltage from becoming too high, and reduces the occurrence of over-discharge in the energy storage battery cells.

In the power-source control method described above, the determining a second target voltage based on all the battery voltages includes:
determining a battery voltage having the smallest voltage value from among all the battery voltages; and
determining the battery voltage having the smallest voltage value as the second target voltage.

The battery voltages of all the energy storage battery cells are obtained and sorted for comparison. The battery voltage having the smallest voltage value is determined from all the battery voltages, indicating that the battery cell has the highest probability of over-discharge under the current condition. Therefore, this battery voltage is determined as the second target voltage, allowing the supplied current to be adjusted based on the second target voltage to avoid over-discharging and damaging the energy storage battery cells.

In accordance with a third aspect of the present application, an embodiment provides an operation control apparatus, including a memory, a processor, and a computer program stored in the memory and executable by the processor, where the computer program, when executed by the processor, enables the processor to implement the power-source control method according to the embodiment of the first aspect above or the power-source control method according to the embodiment of the second aspect above.

The operation control apparatus according to the embodiment of the present application has at least the following beneficial effects. Based on the relationship between the first target voltage of the battery voltages and the first preset voltage threshold, and the relationship between the energy storage voltage of the energy storage system and the second preset voltage threshold, or based on the relationship between the second target voltage of the battery voltages and the third preset voltage threshold, and the difference between the bus voltage of the power supply bus and the fourth preset voltage threshold, the current between the power supply bus and the plurality of energy storage battery cells is regulated in real time, so as to accordingly adjust the energy storage voltage or the bus voltage to reach the preset voltage threshold, while preventing the battery voltage from becoming too high or too low, thereby avoiding overcharging and over-discharging of the energy storage battery cells and improving the reliability and service life of the energy storage system.

In accordance with a fourth aspect of the present application, an embodiment provides an energy storage system including an operation control apparatus as described in the embodiment of the third aspect above.

The energy storage system according to the embodiment of the present application has at least the following beneficial effects. Based on the relationship between the first target voltage of the battery voltages and the first preset voltage threshold, and the relationship between the energy storage voltage of the energy storage system and the second preset voltage threshold, or based on the relationship between the second target voltage of the battery voltages and the third preset voltage threshold, and the difference between the bus voltage of the power supply bus and the fourth preset voltage threshold, the current between the power supply bus and the plurality of energy storage battery cells is regulated in real time, so as to accordingly adjust the energy storage voltage or the bus voltage to reach the preset voltage threshold, while preventing the battery voltage from becoming too high or too low, thereby avoiding overcharging and over-discharging of the energy storage battery cells and improving the reliability and service life of the energy storage system.

In accordance with a fifth aspect of the present application, an embodiment provides a computer-readable storage medium storing computer-executable instructions configured to enable a computer to perform the power-source control method according to the embodiment of the first aspect above or the power-source control method according to the embodiment of the second aspect above.

The computer-readable storage medium according to the embodiment of the present application has at least the following beneficial effects. Based on the relationship between the first target voltage of the battery voltages and the first preset voltage threshold, and the relationship between the energy storage voltage of the energy storage system and the second preset voltage threshold, or based on the relationship between the second target voltage of the battery voltages and the third preset voltage threshold, and the difference between the bus voltage of the power supply bus and the fourth preset voltage threshold, the current between the power supply bus and the plurality of energy storage battery cells is regulated in real time, so as to accordingly adjust the energy storage voltage or the bus voltage to reach the preset voltage threshold, while preventing the battery voltage from becoming too high or too low, thereby avoiding overcharging and over-discharging of the energy storage battery cells and improving the reliability and service life of the energy storage system.

Additional features and advantages of the present application will be set forth in the subsequent description, and in part will become apparent from the description, or may be learned by practice of the present application. The purposes and other advantages of the present application can be realized and obtained by structures particularly noted in the description and the accompanying drawings.

### BRIEF DESCRIPTION OF DRAWINGS

The present application will be further explained hereinafter with reference to the accompanying drawings and embodiments.
FIG. 1 is a schematic diagram of an energy storage system for executing a power-source control method according to an embodiment of the present application;
FIG. 2 is a control principle diagram of a power-source control method according to an embodiment of the present application;
FIG. 3 is a control principle diagram of another power-source control method according to an embodiment of the present application;
FIG. 4 is a flowchart of a power-source control method of an energy storage system according to an embodiment of the present application;
FIG. 5 is a specific flowchart of step S300 in FIG. 4;
FIG. 6 is a specific flowchart of step S320 in FIG. 5;
FIG. 7 is a specific flowchart of step S200 in FIG. 4;
FIG. 8 is a flowchart of another power-source control method of an energy storage system according to an embodiment of the present application;
FIG. 9 is a specific flowchart of step S600 in FIG. 8;
FIG. 10 is a specific flowchart of step S620 in FIG. 9;
FIG. 11 is a specific flowchart of step S500 in FIG. 8; and
FIG. 12 is a schematic diagram of an operation control apparatus according to an embodiment of the present application.

### DETAILED DESCRIPTION OF EMBODIMENTS

This section will describe embodiments of the present application in detail, and the preferred embodiments of the present application are shown in the accompanying drawings. The accompanying drawings are used to supplement the specification with graphic illustrations, so that each feature and the overall technical scheme of the present application can be intuitively and vividly understood. However, the accompanying drawings should not be construed as limiting the scope of the present application.

It should be understood that, in the description of the embodiments of the present application, if "first" and "second", etc. are referred to, it is only for the purpose of distinguishing technical features, and shall not be understood as indicating or implying relative importance or implying the number of the indicated technical features or implying the sequence of the indicated technical features. "At least one" means one or more, and "a plurality of" means two or more. "At least one of" and a similar expression means any combination of the items, including a single item or any combination of a plurality of items.

Furthermore, unless otherwise expressly specified and defined, the term "connect/couple" is to be understood broadly, which, for example, it may mean a fixed connection or a movable connection, a detachable or non-detachable connection, or an integral connection; it may mean a mechanical connection or an electrical connection, or a communication connection; and it may mean a direct connection, or an indirect connection by means of an intermediate medium.

In the description of the embodiments of the present application, the description with reference to the terms "an embodiment/implementation", "another embodiment/implementation", "some embodiments/implementations", "in the above embodiment/implementation", and the like means that specific features, structures, materials, or characteristics described in combination with the embodiment or example are included in at least two embodiments or implementations of the present application. In the present application, the illustrative expressions of the aforementioned terms do not necessarily refer to the same embodiment or implementation. It is to be noted that although a logical order is shown in the flowcharts, the steps shown or described may be performed, in some cases, in a different order from the order shown or described in the flowcharts.

It is to be noted that the features involved in various embodiments of the present application described below may be combined with each other as long as they do not conflict with each other.

An embodiment of the present application provides an energy storage system and a power-source control method thereof, an apparatus, and a storage medium. Based on the relationship between the first target voltage of the battery voltages and the first preset voltage threshold, and the relationship between the energy storage voltage of the energy storage system and the second preset voltage threshold, or based on the relationship between the second target voltage of the battery voltages and the third preset voltage threshold, and the difference between the bus voltage of the power supply bus and the fourth preset voltage threshold, the current between the power supply bus and the plurality of energy storage battery cells is regulated in real time, so as to accordingly adjust the energy storage voltage or the bus voltage to reach the preset voltage threshold, while preventing the battery voltage from becoming too high or too low, thereby avoiding overcharging and over-discharging of the energy storage battery cells and improving the reliability and service life of the energy storage system.

The embodiments of the present application will be further explained below with reference to the accompanying drawings.

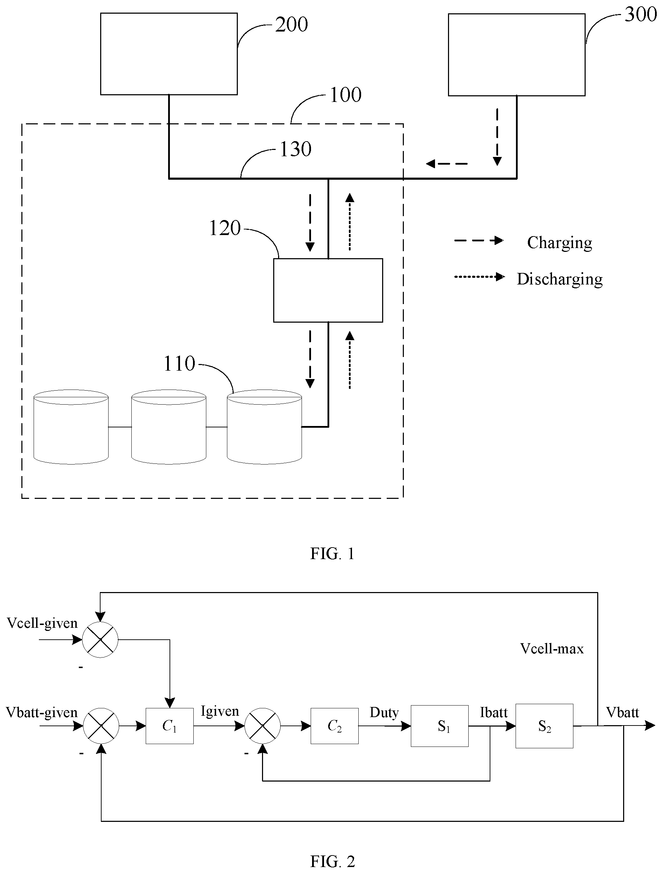

In a first aspect, referring to FIG. 1, FIG. 1 is a schematic diagram of an energy storage system 100 for executing a power-source control method according to an embodiment of the present application.

It can be understood that the energy storage system 100 includes a power supply bus 130 and a plurality of energy storage battery cells 110. The energy storage battery cells 110 are connected to the power supply bus 130, so that each of the energy storage battery cells 110 may acquire electrical energy from a power supply 200 through the power supply bus 130 for charging, or may transmit electrical energy to a power consumption device 300 through the power supply bus 130 for discharging.

Since the energy storage system 100 request a high energy capacity and voltage, while a single energy storage battery cell 110 has relatively low energy capacity, multiple energy storage battery cells 110 are connected in series, such that the energy storage system 100 can reach a storage voltage of user's need. However, during the charging and discharging process, there is a risk that the storage voltage may not reach the specified voltage value while one of the battery voltage among energy storage battery cells 110 has already exceeded its safe threshold, that is, overcharging or over-discharging occurs, damaging the energy storage battery cell 110 and thus affecting the reliability and service life of the whole energy storage system 100.

The energy storage system 100 further includes a switch device 120. The switch device 120 may be a switching transistor connected to the plurality of energy storage battery cells 110. Therefore, by controlling the on-off state of the switching transistor, it is possible to adjust the current between the power supply bus 130 and the plurality of energy storage battery cells 110, thereby adjusting the battery voltages of the energy storage battery cells 110, and further adjusting and balancing the energy storage voltage of the energy storage system 100, so that the energy storage voltage can be charged or discharged to a specified voltage.

Referring to FIG. 2, FIG. 2 is a control principle diagram of a power-source control method according to an embodiment of the present application. Herein, Vcell is a battery voltage of an energy storage battery cell 110, Vcell-given is a first preset voltage threshold, Vcell-max is a first target voltage, Vbatt_given is a second preset voltage threshold, Vbatt is an energy storage voltage of the energy storage system 100, Igiven is a first current value, Ibatt is a current value between the power supply bus 130 and the energy storage battery cells110, and Duty is a duty cycle value in a first duty cycle control signal.

The energy storage system 100 includes a first controller and a second controller. The first controller may output a first current value based on a difference between the first preset voltage threshold and the battery voltage and a difference between the second preset voltage threshold and the energy storage voltage, and the second controller may output a first duty cycle control signal based on a difference between the first current value and a current flowing through the energy storage system 100. Based on the first duty cycle control signal, the switching transistor can be controlled to turn on or off, thereby adjusting the current between the power supply bus 130 and the plurality of energy storage battery cells 110, and further adjusting the battery voltages of the energy storage battery cells 110, such that the energy storage voltage of the energy storage system 100 reaches a specified voltage.

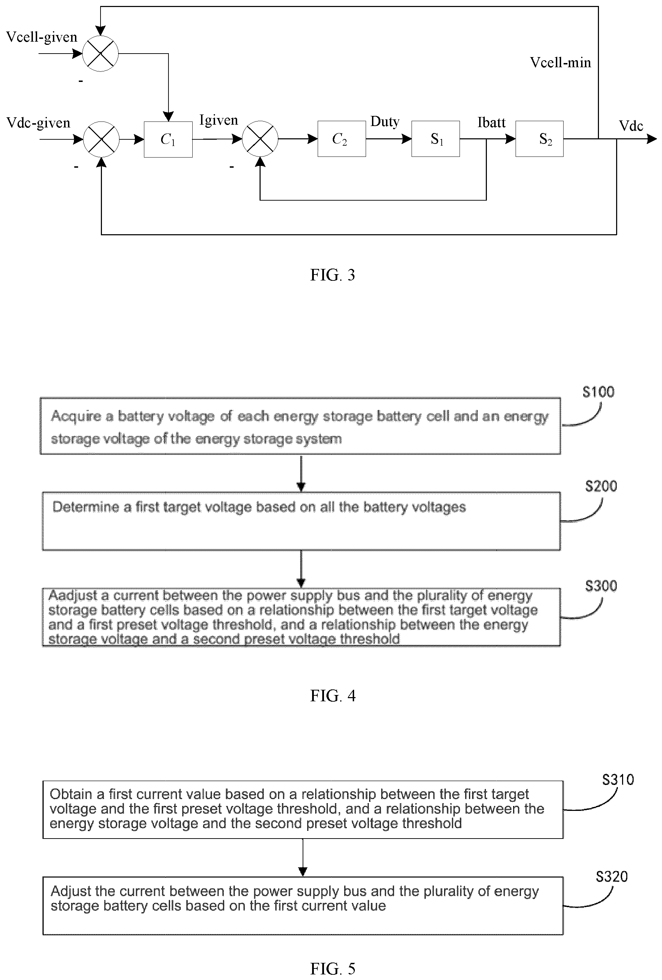

Referring to FIG. 3, FIG. 3 is a control diagram of another power-source control method according to an embodiment of the present application. Herein, Vcell is a battery voltage of an energy storage battery cell 110, Vcell-given is a third preset voltage threshold, Vcell-min is a second target voltage, Vdc_given is a fourth preset voltage threshold, Vdc is a bus voltage of the power supply bus 130, Igiven is a second current value, Ibatt is a current value between the power supply bus 130 and the energy storage battery cells 110, and Duty is a duty cycle value in a second duty cycle control signal.

The first controller may output a second current value based on a difference between the third preset voltage threshold and the battery voltage and a difference between the fourth preset voltage threshold and the bus voltage, and the second controller may output a second duty cycle control signal based on a difference between the second current value and the current flowing through the power supply bus 130. Therefore, based on the second duty cycle control signal, the switching transistor can be controlled to turn on or off, and thus the current between the power supply bus 130 and the plurality of energy storage battery cells 110 can be adjusted, thereby adjusting the battery voltages of the energy storage battery cells 110, such that the energy storage voltage of the energy storage system 100 reaches a specified voltage, while the bus voltage of the power supply bus 130 can reach a corresponding specified voltage.

The energy storage system 100 described in the embodiments of the present application is for more clearly explaining the technical schemes of the embodiments of the present application, and does not constitute a limitation on the technical schemes provided by the embodiments of the present application. Those skilled in the art can know that with the evolution of the energy storage system 100 and the emergence of new application scenarios, the technical schemes provided by the embodiments of the present application are also applicable to similar technical problems.

It will be understood by those skilled in the art that the structure of the energy storage system 100 shown in FIG. 1 does not limit the embodiments of the present application, and there may be more or fewer components than illustrated, or some of the components may be combined, or a different arrangement of the components may be used.

Based on the configuration of the energy storage system 100 described above, various embodiments of the power-source control method of the energy storage system of the present application are proposed.

Referring to FIG. 4, FIG. 4 is a flowchart of a power-source control method of an energy storage system according to an embodiment of the present application. The power-source control method of the energy storage system can be applied to the energy storage system 100 shown in FIG. 1, and the power-source control method of the energy storage system includes, but is not limited to, the following steps.

At S100, a battery voltage of each energy storage battery cell and an energy storage voltage of the energy storage system are acquired.

At S200, a first target voltage is determined based on all the battery voltages.

At S300, a current between the power supply bus and the plurality of energy storage battery cells is adjusted based on a relationship between the first target voltage and a first preset voltage threshold, and a relationship between the energy storage voltage and a second preset voltage threshold.

It can be understood that the corresponding battery voltage is obtained by measuring the voltage of each energy storage battery cell, and the energy storage voltage of the entire energy storage system is obtained by measuring the voltage of the energy storage system. Since the respective energy storage battery cells are connected in series to each other, the energy storage voltage can be obtained by calculating the sum of all the battery voltages.

In order to avoid the energy storage capacity of some energy storage battery cells reaching an upper limit during the charging process and continuing to charge, that is, the occurrence of overcharging, a first target voltage is determined from all the battery voltages, and the first target voltage can be expressed as a battery voltage of the energy storage battery cell that is prone to overcharging among the current energy storage battery cells.

Accordingly, a first voltage difference is obtained by comparing the first target voltage with a first preset voltage threshold that is set in advance, where the first preset voltage threshold may be an energy storage upper limit of the energy storage battery cell. The first voltage difference indicates the amount of electrical energy that the corresponding energy storage battery cell can currently continue to store. In addition, a second voltage difference is obtained by comparing the energy storage voltage of the energy storage system with the second preset voltage threshold that is set in advance, where the second preset voltage threshold may be a target charging voltage of the energy storage system, that is, the energy storage voltage is monitored in real time, and the target charging voltage is compared with the current energy storage voltage in real time to obtain the energy storage condition of the current energy storage system, to determine whether the energy storage system needs to continue charging. The second voltage difference can indicate the amount of electrical energy that the current energy storage system can continue to store. When the second voltage difference is 0, it can be considered that the energy storage system has completed energy storage and does not need to continue charging, and the current between the power supply bus and the plurality of energy storage battery cells can be adjusted to 0 to avoid overcharging and damage to the energy storage system. When the second voltage difference is greater than 0, it can be considered that the energy storage system has not completed energy storage and still needs to continue charging, and as the first voltage difference is small, it can be considered that the current power of the storage battery cell is high and is about to reach its upper limit of energy storage. Therefore, it is necessary to reduce the current flowing through the energy storage system. When the current value flowing through the energy storage system decreases, that is, the current value flowing through the energy storage battery cells decreases, the power entering the energy storage battery cells also decreases accordingly, thereby avoiding overcharging of the energy storage battery cell. When the first voltage difference is 0 or less than 0, that is, the first target voltage is equal to or higher than the first preset voltage threshold, it is indicated that the current power of the energy storage battery cell has reached its target energy storage value. If the energy storage system continues to charge with the same current condition, the energy storage battery cell may be overcharged and damaged. Therefore, the energy storage system is stopped from charging and storing energy, so that the battery voltage of the energy storage battery cell can be stabilized within a safe threshold range, effectively preventing the overvoltage in the energy storage battery cell.

The energy storage condition of the energy storage battery cells is determined by comparing the first target voltage with the first preset voltage threshold, and the energy storage condition of the whole energy storage system is determined by comparing the energy storage voltage with the second preset voltage threshold. Based on the individual energy storage conditions of the energy storage battery cells and the overall energy storage situation of the energy storage system, the current between the power supply bus and the plurality of energy storage battery cells can be adjusted, i.e., the current flowing through the energy storage battery cells can be adjusted, thereby allowing for adjustment of both the battery voltages of the energy storage battery cells and the overall energy storage voltage of the system. Thus, by utilizing a new battery voltage and a new energy storage voltage, the current through the energy storage battery cell can be regulated in real-time, continuously stabilizing the battery voltages of the energy storage battery cells until the energy storage voltage reaches the second preset voltage threshold. This reduces the occurrence of overvoltage in the energy storage battery cells and enhances the reliability and service life of the energy storage system.

Referring to FIG. 5, it is a specific flowchart of step S300 in FIG. 4, in the example of FIG. 5, step S300 includes, but is not limited to, the following steps.

At S310, a first current value is obtained based on a relationship between the first target voltage and the first preset voltage threshold, and a relationship between the energy storage voltage and the second preset voltage threshold.

At S320, the current between the power supply bus and the plurality of energy storage battery cells is adjusted based on the first current value.

It can be understood that by comparing the second preset voltage threshold and the energy storage voltage, it can be determined whether the energy storage system needs charging and energy storage. The current energy storage condition of the energy storage battery cells is determined by the difference between the first preset voltage threshold and the first target voltage, thereby determining the first current value.

When the difference between the second preset voltage threshold and the energy storage voltage is large, it is indicated that the current energy storage system has a significant capacity left for further charging, and as the difference between the first preset voltage threshold and the first target voltage is large, it is indicated that, the energy storage battery cells also have a considerable capacity for further charging, and the obtained first current value can be larger, thus the energy storage rate is increased while stabilizing the battery voltages. When the difference between the second preset voltage threshold and the energy storage voltage is small, it is indicated that the current energy storage system has little capacity left for further charging, and as the difference between the first preset voltage threshold and the first target voltage is small, it is indicated that, the energy storage battery cells also have little capacity left for further charging. At this point, if the current flowing through the energy storage system is too high, it can lead to excessive battery voltage and cause overcharging. Therefore, a smaller first current value is obtained to limit the current flowing through the energy storage system, thereby reducing the power entering the energy storage battery cells and stabilizing the battery voltages of the energy storage battery cells within a safe threshold range.

Therefore, by adjusting the current flowing between the power supply bus and the plurality of energy storage battery cells to the first current value, the current flowing through the energy storage battery cells can be regulated accordingly, which stabilizes the current flowing between the power supply bus and the energy storage battery cells until the energy storage voltage reaches the second preset voltage threshold, and also ensures that the battery voltages remain within a safe threshold range, thereby avoiding overcharging of the energy storage battery cells and enhancing the reliability and service life of the energy storage system.

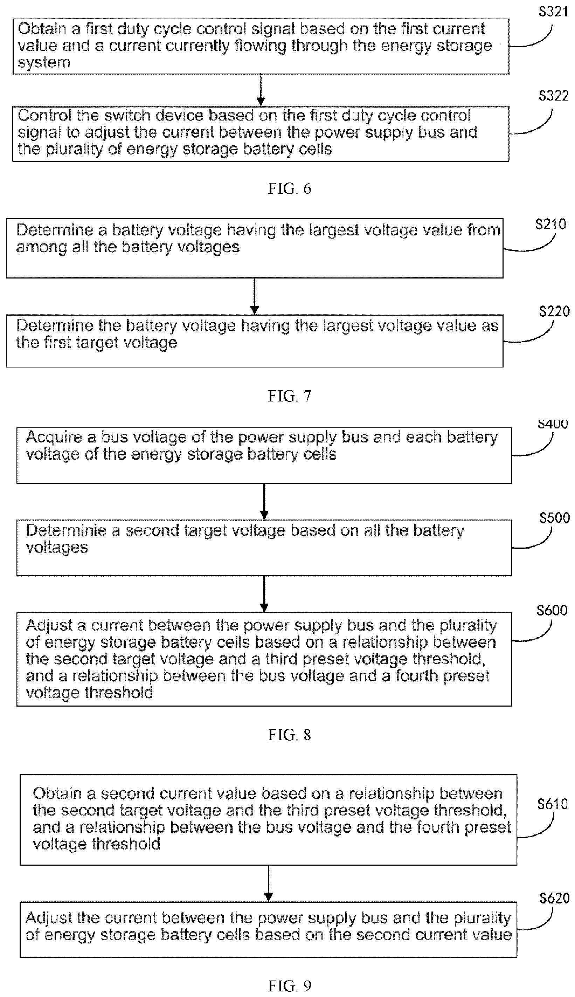

Referring to FIG. 6, it is a specific flowchart of step S320 in FIG. 5, in the example of FIG. 6, step S320 includes, but is not limited to, the following steps.

At S321, a first duty cycle control signal is obtained based on the first current value and a current currently flowing through the energy storage system.

At S322, the switch device is controlled based on the first duty cycle control signal to adjust the current between the power supply bus and the plurality of energy storage battery cells.

It can be understood that the current that is currently flowing through the energy storage system is measured, and by comparing the difference between the first current value and the current that is currently flowing through the energy storage system, it is determined whether the current that is currently flowing through the energy storage system has reached the first current value. The first duty cycle control signal is obtained using the difference between the first current value and the current that is currently flowing through the energy storage system. Since the power supply bus is connected to the plurality of energy storage battery cells through switch devices, the first duty cycle control signal can be used to control the conduction state of the switch devices, which allows for the regulation of the current flowing through the switch devices, thereby stabilizing the battery voltages of the energy storage battery cells, avoiding overcharging, and enhancing the reliability and service life of the energy storage system.

Referring to FIG. 7, it is a specific flowchart of step S200 in FIG. 4, in the example of FIG. 7, step S200 includes, but is not limited to, the following steps.

At S210, a battery voltage having the largest voltage value is determined from among all the battery voltages.

At S220, the battery voltage having the largest voltage value is determined as the first target voltage.

It can be understood that by sorting and comparing the battery voltages of all the energy storage battery cells, the battery voltage having the largest voltage value is determined from all the battery voltages, which indicates that in the current condition, this energy storage battery cell is the first one prone to reach its upper limit of energy storage, meaning it has the highest probability of overcharging, so that the battery voltage is used as the first target voltage, and the current between the power supply bus and the plurality of energy storage battery cells is adjusted based on the first target voltage, so as to avoid overcharging of the energy storage battery cells before the entire energy storage system is fully charged.

Referring to FIG. 8, FIG. 8 is a flowchart of another power-source control method of an energy storage system according to an embodiment of the present application. The power-source control method of the energy storage system can be applied to the energy storage system 100 shown in FIG. 1, and the power-source control method of the energy storage system includes, but is not limited to, the following steps.

At S400, a bus voltage of the power supply bus and a battery voltage of each energy storage battery cell are acquired.

At S500, a second target voltage is determined based on all the battery voltages.

At S600, a current between the power supply bus and the plurality of energy storage battery cells is adjusted based on a relationship between the second target voltage and a third preset voltage threshold, and a relationship between the bus voltage and a fourth preset voltage threshold.

It can be understood that when the energy storage system supplies power to the power supply bus, the corresponding battery voltage is obtained by monitoring the voltage of each energy storage battery cell in real time, and the voltage of the power supply bus is monitored in real time to obtain the bus voltage, that is, the actual power supply voltage of the energy storage system.

In order to avoid continuing discharging when some energy storage battery cells do not have sufficient stored energy, that is, the occurrence of over-discharging, the second target voltage is determined from all the battery voltages, and the second target voltage can be expressed as the battery voltage of an energy storage battery cell that is prone to over-discharge among the energy storage battery cells. By comparing the difference between the third preset voltage threshold and the second target voltage, the energy storage condition of the battery cells is determined, indicating whether they can continue to discharge and supply energy, and by comparing the difference between the fourth target voltage and the bus voltage, the current power supply condition of the energy storage system is determined. Herein, the fourth preset voltage threshold may be the rated power supply voltage of the energy storage system, that is, the voltage required by a power consumption device. The difference between the rated power supply voltage and the actual power supply voltage is used to determine whether the actual power supply voltage of the energy storage system reaches the rated power supply voltage, ensuring stable voltage delivery to the power consumption device. When the difference between the fourth target voltage and the bus voltage is 0, it is indicated that the current actual power supply voltage reaches the rated power supply voltage, and the bus voltage can be stabilized by maintaining the current between the current power supply bus and the plurality of energy storage battery cells, and thus a stable voltage can be provided to the power consumption device. When the difference between the fourth target voltage and the bus voltage is greater than or less than 0, it is indicated that the current actual power supply voltage has not reached the rated power supply voltage, and it is necessary to increase or decrease the current between the power supply bus and the plurality of energy storage battery cells accordingly to stabilize the bus voltage and provide a stable voltage to the power consumption device.

When the second target voltage is lower than the third preset voltage threshold, it is indicated that one of the energy storage battery cells is prone to over-discharging, and the current between the power supply bus and the energy storage battery cells should be reduced, that is, the energy flowing out of the energy storage battery cells is also correspondingly reduced, thereby stabilizing the battery voltages of the energy storage battery cells within a safety threshold range and effectively avoiding over-discharge of the energy storage battery cells. Herein, the third preset voltage threshold may be obtained based on the battery characteristics of the energy storage battery cells, for example, a lower limit value of the discharge voltage of the energy storage battery cells. When the battery voltage is lower than the third preset voltage threshold, it can be considered that the current battery voltage is low, that is, the power of the energy storage battery power supply is insufficient. If the energy storage system continues to discharge by the current state, the energy storage battery cell will be over-discharged before the energy storage system ends discharging, and therefore, the discharge and energy supply of the energy storage system should be stopped.

Based on the comparison between the second target voltage and the third preset voltage threshold, the dischargeable energy supply condition of the energy storage battery cell is determined. The overall energy supply condition of the energy storage system is determined by comparing the bus voltage and the fourth preset voltage threshold. Combining the dischargeable energy supply condition of the energy storage battery cells and the overall energy supply condition of the energy storage system allows for adjustments to be made to the current between the power supply bus and the multiple energy storage battery cells, which can modulate the current flowing through the energy storage battery cells, thereby regulating both the battery voltages of the energy storage battery cells and the bus voltage of the power supply bus, reducing the occurrence of over-discharging in the energy storage battery cells and regulating and hence stabilizing the bus voltage of the power supply bus to the fourth preset voltage threshold, which enhances the reliability and service life of the energy storage system.

In addition, when the energy storage system supplies power to the power supply bus, the overall energy storage voltage of the energy storage system may also be monitored in real time to determine whether the remaining electrical energy of the energy storage system, i.e., the electrical energy in the energy storage system, is sufficient to continue to supply power. When the energy storage voltage is lower than a specified voltage, it can be considered that the current remaining power of the energy storage system cannot continue to supply power, so the current between the power supply bus and the energy storage battery cell can be adjusted to 0, that is, the power supply from the energy storage system is stopped.

Referring to FIG. 9, it is a specific flowchart of step S600 in FIG. 8, in the example of FIG. 9, step S600 includes, but is not limited to, the following steps.

At S610, a second current value is obtained based on a relationship between the second target voltage and the third preset voltage threshold, and a relationship between the bus voltage and the fourth preset voltage threshold.

At S620, the current between the power supply bus and the plurality of energy storage battery cells is adjusted based on the second current value.

It can be understood that by assessing the difference between the fourth preset voltage threshold and the bus voltage, it can be determined whether the actual power supply voltage reaches the rated power supply voltage. By assessing the difference between the third preset voltage threshold and the second target voltage, it is possible to determine the amount of electrical energy that the energy storage battery cells can continue to discharge for energy supply, thereby determining the second current value.

When the difference between the fourth preset voltage threshold and the bus voltage is large, it is indicated that the current actual power supply voltage is far from the rated power supply voltage, and as the difference between the third preset voltage threshold and the second target voltage is large, it is indicated that the current energy storage battery cells have a considerable capacity for further discharging and energy supply, and the second current value is larger. When the difference between the fourth preset voltage threshold and the bus voltage is small, it is indicated that the current actual supply voltage is close to the rated supply voltage, and as the difference between the third preset voltage threshold and the second target voltage is small, it is indicated that the current energy available for discharge from the energy storage battery cells is limited. If the current flowing out of the energy storage system is too high, it can easily lead to a low battery voltage and result in over-discharging. Therefore, the obtained second current value is small, which, while ensuring that the bus voltage remains stable at the rated supply voltage, limits the current flowing out of the energy storage system, reduces the energy flowing out of the energy storage battery cells, and stabilizes the battery voltages of the energy storage battery cells within a safe threshold range. When the second target voltage is lower than the third preset voltage threshold, it can be considered that the energy storage battery cells are over-discharged, and it is necessary to stop the discharge and energy supply of the energy storage system to avoid damage to the energy storage system.

Therefore, by adjusting the current flowing between the power supply bus and the plurality of energy storage battery cells to the second current value, the current flowing out of the energy storage battery cells can be regulated accordingly, which stabilizes the bus voltage at the fourth preset voltage threshold and also ensures that the battery voltages remain within a safe threshold range, thereby avoiding over-discharging of the energy storage battery cells and enhancing the reliability and service life of the energy storage system.

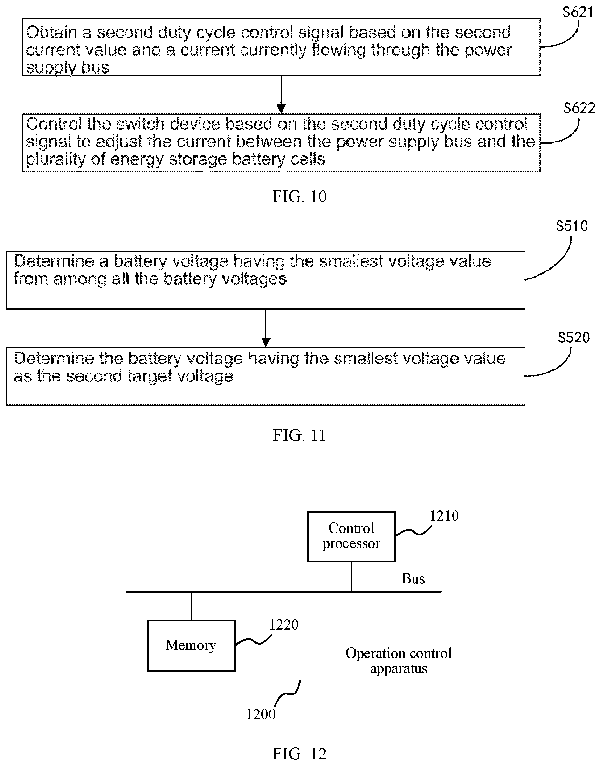

Referring to FIG. 10, it is a specific flowchart of step S620 in FIG. 9, in the example of FIG. 10, step S620 includes, but is not limited to, the following steps.

At S621, s second duty cycle control signal is obtained based on the second current value and the current currently flowing through the power supply bus.

At S622, the switch device is controlled based on the second duty cycle control signal to adjust the current between the power supply bus and the plurality of energy storage battery cells.

It can be understood that the current that is currently flowing through the power supply bus is measured, and by comparing the difference between the second current value and the current that is currently flowing through the power supply bus, it is determined whether the current that is currently flowing through the power supply bus has reached the second current value. The second duty cycle control signal is obtained by using the difference between the second current value and the current that is currently flowing through the power supply bus. Since the power supply bus is connected to the plurality of energy storage battery cells through the switch device, the conduction state of the switch device is controlled by the second duty ratio control signal, and the current flowing through the switch device can be adjusted, that is, the current between the power supply bus and the plurality of energy storage battery cells can be adjusted to stabilize the bus voltage by the fourth preset voltage threshold, and the battery voltages of the energy storage battery cells can be stabilized within a safe threshold range, so as to avoid the over-discharge of the energy storage battery cells and improve the reliability and service life of the energy storage system.

Referring to FIG. 11, it is a specific flowchart of step S500 in FIG. 8, in the example of FIG. 11, step S500 includes, but is not limited to, the following steps.

At S510, a battery voltage having the smallest voltage value is determined from among all the battery voltages.

At S520, the battery voltage having the smallest voltage value is determined as the second target voltage.

It can be understood that by sorting and comparing the battery voltages of all the energy storage battery cells, the battery voltage having the smallest voltage value is determined from all the battery voltages, which indicates that in the current condition, this energy storage battery cell is the first one to reach its lower limit of energy supply, meaning it has the highest probability of over-discharging, so that its battery voltage is used as the second target voltage, and the current between the power supply bus and the plurality of energy storage battery cells is adjusted based on the second target voltage, so as to avoid over-discharging of the energy storage battery cells before the entire energy storage system is fully discharged.

Referring to FIG. 12, FIG. 12 is a schematic diagram of an operation control apparatus 1200 according to an embodiment of a third aspect of the present application. The operation control apparatus 1200 includes: a memory 1210, a processor 1220, and a computer program stored in the memory 1210 and executable by the processor 1220, where the processor 1220, when executing the computer program, implements the power-source control method of the energy storage system in the above embodiments.

As a non-transitory computer-readable storage medium, the memory 1210 may be configured to store a non-transitory software program and a non-transitory computer-executable program, for example, the power-source control method of the energy storage system described in the above embodiments of the present application. The processor 1220 implements the power-source control method of the energy storage system in the above embodiments of the present application by executing the non-transitory software program and instructions stored in the memory 1210.

The memory 1210 may include a program storage area and a data storage area, where the program storage area may store an operating system and application program(s) required by at least one function, and the data storage area may store data required for performing the power-source control method of the energy storage system in the above-described embodiments. In addition, the memory 1210 may include a high-speed random access memory 1210 and a non-transitory memory 1210, for example, at least one of a magnetic disk storage device, a flash memory device, or another non-transitory solid-state storage device. It should be noted that the memory 1210 optionally includes memories 1210 located remotely with respect to the processor 1220, and these remote memories 1210 may be connected to the terminal device through a network. Examples of the above-mentioned network include, but are not limited to, the Internet, an intranet, a local area network, a mobile communication network, or a combination thereof.

A non-transitory software program and instructions required to implement the power-source control method of the energy storage system of the above embodiments are stored in the memory, and when executed by one or more processors, enable the one or more processors to perform the power-source control method of the energy storage system of the above embodiments, for example, to perform the above-described method steps S100 to S300 in FIG. 4, method steps S310 to S320 in FIG. 5, method steps S321 to S322 in FIG. 6, method steps S210 to S220 in FIG. 7, method steps S400 to S600 in FIG. 8, method steps S610 to S620 in FIG. 9, method steps S621 to S622 in FIG. 10, or method steps S510 to S520 in FIG. 11.

An embodiment of the fourth aspect of the present application provides an energy storage system including the operation control apparatus 1200 according to the embodiment of the third aspect. Therefore, based on the relationship between the first target voltage of the battery voltages and the first preset voltage threshold, and the relationship between the energy storage voltage of the energy storage system and the second preset voltage threshold, or based on the relationship between the second target voltage of the battery voltages and the third preset voltage threshold, and the difference between the bus voltage of the power supply bus and the fourth preset voltage threshold, the current between the power supply bus and the plurality of energy storage battery cells is regulated in real time, so as to accordingly adjust the energy storage voltage or the bus voltage to reach the preset voltage threshold, while preventing the battery voltage from becoming too high or too low, thereby avoiding overcharging or over-discharging of the energy storage battery cells and improving the reliability and service life of the energy storage system.

An embodiment of the fifth aspect of the present application provides a computer-readable storage medium storing computer-executable instructions, which may be configured to enable a computer to perform the power-source control method of the energy storage system according to the embodiment of the second aspect described above, for example, to perform the above-described method steps S100 to S300 in FIG. 4, method steps S310 to S320 in FIG. 5, method steps S321 to S322 in FIG. 6, method steps S210 to S220 in FIG. 7, method steps S400 to S600 in FIG. 8, method steps S610 to S620 in FIG. 9, method steps S621 to S622 in FIG. 10, or method steps S510 to S520 in FIG. 11.

It can be understood by those of ordinary skill in the art that all or some of the steps of the methods and systems disclosed above may be implemented as software, firmware, hardware, and appropriate combinations thereof. Some or all of the physical components may be implemented as software executable by a processor, such as a central processing unit, a digital signal processor or a microprocessor, or as hardware, or as an integrated circuit, such as an application-specific integrated circuit. Such software may be distributed on a computer-readable media, which may include computer-readable storage media, non-transitory media, communication media, or transitory media. As well known to those of ordinary skill in the art, the term "computer-readable storage medium" includes volatile and nonvolatile, removable and non-removable media implemented in any method or technique for storage of information, such as computer-readable instructions, data struFctures, program modules or other data. A computer-readable storage medium includes but is not limited to RAM, ROM, EEPROM, flash memory or other memory technologies, CD-ROM, digital versatile disk (DVD) or other optical disk storage, cassettes, magnetic tapes, magnetic disk storage or other magnetic storage apparatuses, or any other medium that can be configured to store desired information and can be accessed by a computer. Furthermore, it is well known to those of ordinary skill in the art that communication media typically contain computer-readable instructions, data structures, program modules or other data in a modulated data signal such as a carrier wave or other transmission mechanism, and may include any information transmission media.

Although the embodiments of the present application have been described in detail above with reference to the accompanying drawings, the present application is not limited to the above embodiments, and various changes may be made within the knowledge of those of ordinary skill in the art without departing from the scope of the present application.

## Claims

1. A power-source control method of an energy storage system, wherein the energy storage system comprises a power supply bus and a plurality of energy storage battery cells connected in series and electrically connected to the power supply bus, the power-source control method comprising:
acquiring a battery voltage of each energy storage battery cell and an energy storage voltage of the energy storage system;
determining a first target voltage based on all the battery voltages; and
adjusting a current between the power supply bus and the plurality of energy storage battery cells based on a relationship between the first target voltage and a first preset voltage threshold, and a relationship between the energy storage voltage and a second preset voltage threshold.

2. The power-source control method of claim 1, wherein the adjusting a current between the power supply bus and the plurality of energy storage battery cells based on a relationship between the first target voltage and a first preset voltage threshold, and a relationship between the energy storage voltage and a second preset voltage threshold comprises:
obtaining a first current value based on a relationship between the first target voltage and the first preset voltage threshold, and a relationship between the energy storage voltage and the second preset voltage threshold; and
adjusting the current between the power supply bus and the plurality of energy storage battery cells based on the first current value.

3. The power-source control method of claim 2, wherein the energy storage system further comprises a switch device connected to the plurality of energy storage battery cells; and
the adjusting the current between the power supply bus and the plurality of energy storage battery cells based on the first current value comprises:
obtaining a first duty cycle control signal based on the first current value and a current currently flowing through the energy storage system; and
controlling the switch device based on the first duty cycle control signal to adjust the current between the power supply bus and the plurality of energy storage battery cells.

4. The power-source control method of claim 1, wherein the determining a first target voltage based on all the battery voltages comprises:
determining a battery voltage having the largest voltage value from among all the battery voltages; and
determining the battery voltage having the largest voltage value as the first target voltage.

5. A power-source control method of an energy storage system, wherein the energy storage system comprises a power supply bus and a plurality of energy storage battery cells connected in series and electrically connected to the power supply bus, the power-source control method comprising:
acquiring a bus voltage of the power supply bus and a battery voltage of each energy storage battery cell;
determining a second target voltage based on all the battery voltages; and
adjusting a current between the power supply bus and the plurality of energy storage battery cells based on a relationship between the second target voltage and a third preset voltage threshold, and a relationship between the bus voltage and a fourth preset voltage threshold.

6. The power-source control method of claim 5, wherein the adjusting a current between the power supply bus and the plurality of energy storage battery cells based on a relationship between the second target voltage and a third preset voltage threshold, and a relationship between the bus voltage and a fourth preset voltage threshold comprises:
obtaining a second current value based on a relationship between the second target voltage and the third preset voltage threshold, and a relationship between the bus voltage and the fourth preset voltage threshold; and
adjusting the current between the power supply bus and the plurality of energy storage battery cells based on the second current value.

7. The power-source control method of claim 6, wherein the energy storage system further comprises a switch device connected to the plurality of energy storage battery cells, the power supply bus is connected to the switch device; and
the adjusting the current between the power supply bus and the plurality of energy storage battery cells based on the second current value comprises:
obtaining a second duty cycle control signal based on the second current value and a current currently flowing through the power supply bus; and
controlling the switch device based on the second duty cycle control signal to adjust the current between the power supply bus and the plurality of energy storage battery cells.

8. The power-source control method of claim 5, wherein the determining a second target voltage based on all the battery voltages comprises:
determining a battery voltage having the smallest voltage value from among all the battery voltages; and
determining the battery voltage having the smallest voltage value as the second target voltage.

9. An operation control apparatus, comprising a memory, a processor, and a computer program stored in the memory and executable by the processor, wherein the computer program, when executed by the processor, enables the processor to implement the power-source control method of the energy storage system of any one of claims 1 to 8.

10. An energy storage system, comprising the operation control apparatus of claim 9.

11. A computer-readable storage medium storing computer-executable instructions configured to enable a computer to perform the power-source control method of the energy storage system of any one of claims 1 to 8.
